(19) Europäisches Patentamt
European Patent Office
Office européen des brevets

(11) **EP 2 853 719 A1**

(12) **EUROPEAN PATENT APPLICATION**

(43) Date of publication:
**01.04.2015 Bulletin 2015/14**

(51) Int Cl.:
**F02C 7/228** (2006.01)

(21) Application number: **13185968.8**

(22) Date of filing: **25.09.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ALSTOM Technology Ltd
5400 Baden (CH)**

(72) Inventors:
• **Schell, Susanne Renate
5400 Baden (CH)**
• **Gaupp, Christoph
8050 Zurich (CH)**
• **Haerms, Axel
5415 Nussbaumen (CH)**
• **Crompton, Richard
5408 Ennetbaden (CH)**
• **Mueller, Eric Andre
8002 Zurich (CH)**

(54) **Gas turbine with staged fuel injection**

(57)    It is proposed a gas turbine and a method to operate the gas turbine. A fluid is supplied to the gas turbine by means of fluid paths (40, 42, 44). A first fluid path (40) is divided into a second and third fluid path (42, 44). A first control valve (60) controls a fluid mass flow in the first fluid path (40). A second control valve (62) controls a ratio (64) of fluid mass flows in the second and third fluid paths (42, 44).

Fig. 9

## Description

FIELD OF THE INVENTION

The claimed invention is related to a gas turbine and a method to operate the gas turbine.

BACKGROUND

Gas turbine systems are known to comprise different stages of fuel injection. Each stage comprises a corresponding control valve.

DE 10 2006 015 529 A1 relates to a burner system with different stages of fuel injection. Several valves are each connected to a corresponding fuel pipe. The fuel pipe is connected to a corresponding fuel injection stage. The valves are controlled by means of control equipment.

SUMMARY

In the view of the prior art, it is solved the problem to provide the gas turbine system and a method to operate the gas turbine system with a stable control during transient changes in the system.

According to the present disclosure, this problem is solved by providing a first control valve controlling a fluid mass flow in a first fluid path, and a second control valve controlling a ratio of mass flows in a second and third path. Especially fast changes of the total flow in the first fluid path can be operated while achieving a reduced impact of the fast change of the total flow on the ratio. Particularly, cross-coupling effects of the mass flow in the first path and the ratio can be reduced by the ratio control by means of the second control valve. It can be achieved a better accuracy while applying less complex control methods. This allows further improvements in reducing the emissions and / or stability to operate the gas turbine. On the other hand, transient situations can be controlled better. For example, during transients regarding the fluid mass flow through the first fluid path the ratio of the second and third flow in the respective paths can be kept constant providing improved accuracy regarding the control of the fluid mass flow in the first fluid path.

As a third hydraulic diameter of the third fluid path is fixed compared to the hydraulic diameter of the first and second paths, which are adjustable, it is provided more accuracy for the actual fluid mass flows in the second and third fluid paths. Furthermore, the fixed third hydraulic diameter allows the provision of fewer control valves, especially fewer control valves with shut off capability, as a control valve in the third fluid path is omitted. Moreover, the control methods can be less complex therefore providing more stable control while concurrently providing a more precise and better fluid supply. Also the valve size of the second control valve, especially the size of the effective diameter, can be reduced. Especially the reduction of the valve size and the provision of a fewer number of control valves reduce overall system costs. A higher degree of total accuracy can be achieved by smaller valves with the same or lower degree of accuracy.

According to an embodiment is provided a shut off valve arranged in series with the first control valve, and the first control valve providing a shut off capability. Advantageously further shut off valves can be omitted, therefore reducing overall system costs while providing a high degree of safety, especially complying with cipher 5.10.5.4 of ISO 21789:2009.

In an advantageous embodiment it is provided a fourth, fifth and sixth fluid path. A third and a fourth control valve allow the control of a fluid mass flow in the fourth fluid path and a control of a ratio of fluid mass flows in the fifth and sixth fluid paths, respectively. This embodiment allows controlling highly transient operations of the gas turbine by means of the first and third control valve, by for example leaving the respective ratios essentially stable. Highly transient operations or processes of the gas turbine comprise for example load shedding or the start of the gas turbine.

According to a further advantageous embodiment the first and the fourth fluid paths are connected to the same fuel source. The advantages and benefits of the control of the gas turbine in this embodiment allows to reduce costs as only one fuel supply has to be provided for the first and fourth fluid paths.

According to a further advantageous embodiment the second path is connected to a fewer number of fluid outlets, especially burners than the third path. This embodiment allows an operation of the gas turbine with all stages connected to the second and third path to be operated with the same amount of fuel.

In a further advantageous embodiment the maximum of the second hydraulic diameter is smaller than the third hydraulic diameter. This embodiment allows improvement in accuracy regarding the ratio. The smaller the second hydraulic diameter, the more accuracy of the ratio can be achieved. Consequently, in practice it has to be achieved a trade-off between the requirements of fuel supplied with the second fluid path and the accuracy of the ratio to be achieved, wherein the accuracy of the ratio is essentially influenced by the second control valve which defines the maximum of the second hydraulic diameter.

According to an advantageous embodiment the first hydraulic diameter is adjusted in a first time interval and the second hydraulic diameter is adjusted in a second time interval according to a logic exclusive or (XOR) fashion referring to the time intervals. This enables a more precise fuel supply with less complex control methods therefore providing a stable control of the fuel supply.

According to a further advantageous embodiment a response time of the second controller is greater than a response time of the first controller which is an advantageous adaption to operate the gas turbine especially in states between a transient state and a steady state.

In a further embodiment the second control valve is operated in a transient state by a feed forward controller reducing or avoiding cross-coupling effects which may occur between two control loops being active and controlling the first and second control valve in the transient state. According to one embodiment of the method a process variable of the first controller is a pressure difference between a pressure before the first control valve and a pressure behind the first control valve and/or a fluid temperature of fluid in the first path and/or a total fluid mass rate through the first path. Alternatively or in combination a process variable of the second controller is a pressure difference between a pressure before the second control valve and a pressure behind the second control valve. Further, alternatively or in combination an emission of the gas turbine, especially a ratio of nitrogen oxides, of carbon monoxide or of unburned hydrocarbons in the emissions,) and/or a flame stability criteria can be used as variable of the first and/or the second controller. A the flame stability criteria can for example be the determination of pressure fluctuation in the combustion chamber (e.g. combustor pulsations) or radiation (e.g. OH-radicals) or temperature measurement.

BRIEF DESCRIPTION OF THE FIGURES

The above described and other features are exemplified by the following figures and detailed description. Referring now to the figures, which are exemplary embodiments, and wherein like elements are numbered alike:

Figure 1          shows a gas turbine with sequential combustion;

Figure 2          shows a section through a combustor of the gas turbine;

Figure 3 and 4    show a schematic block diagram of a part of a fluid supply, respectively;

Figures 5 to 7    show schematic block diagrams of control methods, respectively;

Figure 8          shows the schematic state diagram; and

Figures 9 to 15   show a schematic valve and fluid path configuration, respectively.

DESCRIPTION OF THE EMBODIMENTS

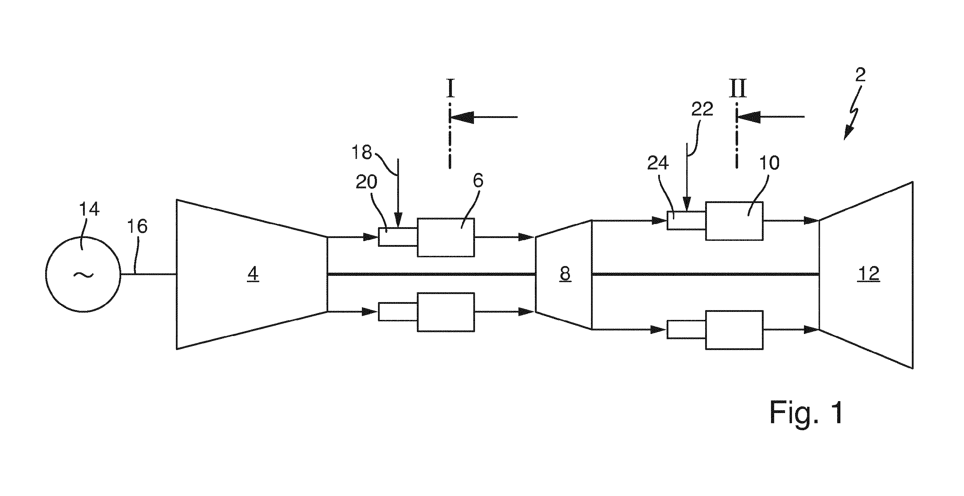

Figure 1 shows in a schematic way a gas turbine 2 with sequential combustion in an exemplary embodiment. The gas turbine 2 includes a compressor 4, a first combustor 6, a first turbine 8, a second combustor 10 and a second turbine 12. Typically, the gas turbine 2 includes a generator 14 which, arranged at the cold end of the gas turbine 2, that is to say at the compressor 4, is coupled to a shaft 16 of the gas turbine 2. A fuel, gas or oil, is introduced via a fuel feed 18 to a burner 20 of the first combustor 6, mixed with air which is compressed in the compressor 1, and combusted. Hot gases are partially expanded in the subsequent first turbine 8.

A fuel feed 22 supplies combustion fluid to a burner 24 of the second combustor 10. The burners 20 of the first combustor 6 are referred to belong to a group. The combustors 24 of the second combustor 10 are referred to belonging to a second group. The reference signs are consequently used in a more general fashion to refer to groups 6 and 10. Of course, the grouping can be arranged differently and the present disclosure may be applied to other types of gas turbines other than the gas turbine 2 shown in figure 1. Of course, the teachings described herein can be applied to any fluid which is supplied to the gas turbine. The fluid can be or include fuel, like gas or oil, water, and/or air.

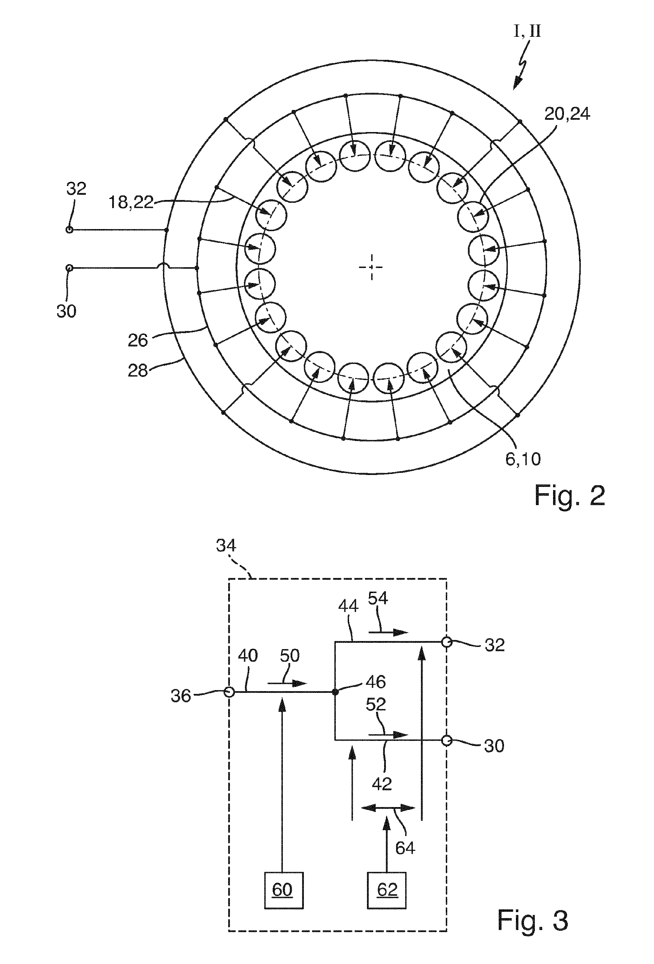

Figure 2 shows a schematic section through the first combustor 6 or the second combustor 10, respectively in an exemplary fashion. Of course, the respective combustors 6 and 10 can be embodied differently. The shown combustors 6, 10 in figure 2 shows also a fuel distribution system which supplies to sub-groups of the burners 20, 24. A sub-group of burners 20, 24 is also referred to as a stage. It is provided a first fuel ring for a main stage or first stage 26. A further fuel ring is provided for a second stage 28 of burners. The respective stages 26 and 28 are supplied with combustion fluid, fuel, by the connection points 30 and 32, respectively. Consequently the stages 26 and 28 can be operated differently to realize a staging and therefore to stabilize the combustion of the respective burner 6, 10.

According to an embodiment of the gas turbine not shown, there can be a plurality of fuel outlets attached to at least one of the burners 20, 24. Therefore, also different stages can be assigned to a plurality of the burners 20, 24. For example, the stages 26 and 28 can be connected to each of the burners 20, 24 of Fig. 2, resulting in each of the burners 20, 24 comprising two fluid outlets. Therefore a group of outlets can be assigned to at least one of the burners 20, 24.

Furthermore, according to an embodiment not shown, there can be a first plurality of first fuel outlets of a first stage attached to a single fuel outlet of a first burner, a second plurality of second fuel outlets of a second stage attached to a first fuel outlet of a second burner, and a third plurality of third fuel outlets of a third stage attached to a second fuel outlet of the second burner.

Figure 3 shows in a schematic way a block diagram of a block 34 with a connection point 36 connected to a fluid supply not shown and with the connection points 30 and 32 to be connected to a respective stage 26, 28 of a group 6, 10 of fluid outlets. The connection point 36 as an input leads to a first fluid path 40, which is separated into a second fluid path 42 and a third fluid path 44 by means of a separation unit 46. Of course, the fluid paths 42 and 44 can comprise further elements like fixed restrictors or fixed orifices which are not shown.

The first fluid path 40 is characterized by a first hydraulic diameter 50. The second fluid path 42 is characterized by a second hydraulic diameter 52. The third fluid path 44 is characterized by a third hydraulic diameter 54. The hydraulic diameter $d_h$ is determined for a respective path by the following equation 1, wherein $A$ is a cross sectional area, and wherein $U$ is the wetted perimeter of the cross-section. In contrast to an effective cross sectional area or a flow coefficient the hydraulic diameter can be determined independently of a volume flow of the fluid.

$$d_h = \frac{4 \cdot A}{U} \qquad (1)$$

The block 34 includes a first control valve 60 and a second control valve 62. The first control valve 60 controls a fluid mass flow in the first fluid path which includes an adjustment of the first hydraulic diameter 50. The second control valve 62 controls a ratio 64 of fluid mass flows in the second and third paths 42 and 44 which either can include an adjustment of the second and third flows through the respective paths by adjusting the second hydraulic diameter 52 only. The first and second control valve 60 and 62 can be implemented as a variable orifice, respectively. The term control valve does not necessarily involve a closed-loop control of the respective valve but may also relate to an open-loop control of the respective valve.

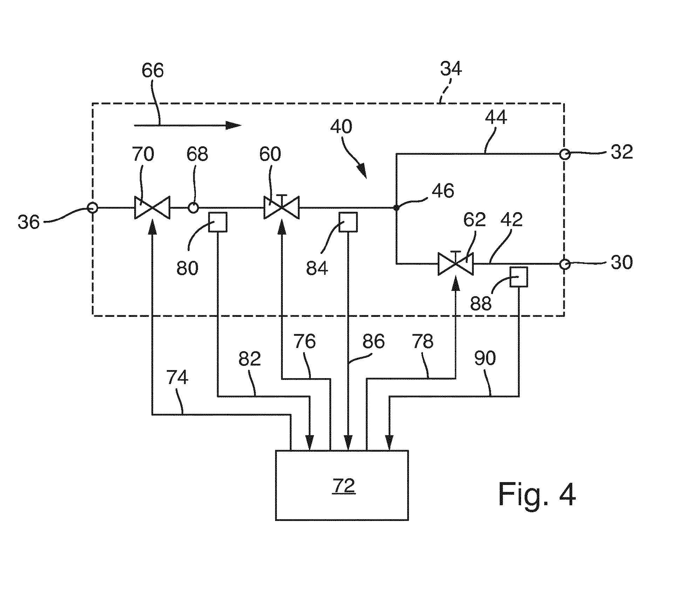

Figure 4 shows an embodiment of block 34 in a schematic way. The connection point 36 is supplied with fluid in a flow direction 66 of the fluid. In an embodiment the first fluid path 40 begins at a connection point 68 and ends on the separation unit 46.

In front of the connection 68 it is arranged a shut off valve 70 arranged in sequence with the first control valve 60. The control valve 60 can comprise a shut off function. A further drain unit not shown is arranged between the valves 60 and 70, especially for double block situations where both valves 60 and 70 are shut off and therefore closed, and furthermore for bleed set up situations in which the drain unit is opened between the valves 60 and 70 to relieve the first fluid path 40.

A control valve like the valves 60 and 62 comprises an open position and a closed position and further positions in between the opened position and the closed position. A shut off valve like the shut off valve 70 on the other hand does only include an opened position and a closed position.

Furthermore, in figure 4 it is shown a control unit 72 which applies control signals 74, 76 and 78 to the valves 70, 60 and 62, respectively. Furthermore, a pressure sensor 80 is arranged ahead of the first control valve 60 to measure a pressure 82 which is supplied to the control unit 72. A pressure sensor 84 is arranged in flow direction 66 behind the first control valve 60 to measure the pressure 86 and supply the pressure 86 to the control unit 72. A further pressure sensor 88 is arranged behind the second control valve 62 to supply a pressure 90 to the control unit 72. Of course, a measurement of the flow can be accomplished by means of other suitable sensors too, or the flow is estimated.

Especially a fluid flow through the first control valve 60 it can be determined with the pressures 82 and 86. The fluid flow through the second path 42 and especially through the second control valve 62 can be determined by the pressures 86 and 90. By the fluid mass flow through the first path 40 and the second path 42 the fluid mass flow through the third path 44 can be determined, for example by determining the difference between the two fluid flows.

In an embodiment not shown the second control valve 62 is arranged at the separation unit 46 in the form of a 3-way-valve.

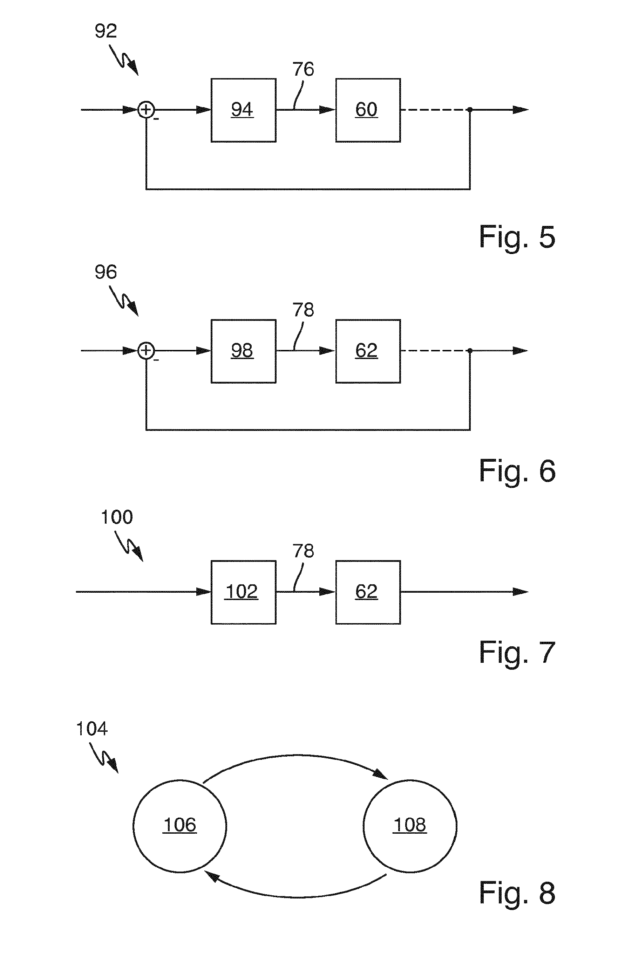

Figure 5 shows a schematic block diagram 92 of a feed-back control loop. A controller 94 is adapted to produce the signal 76 to operate the first control valve 60.

Figure 6 shows a schematic block diagram 96. A controller 98 is adapted to produce the signal 78 to control the second control valve 62.

According to an embodiment a bandwidth of the control loop 92 is greater than a bandwidth of the control loop 96. This means particularly that a time constant of the first controller 94 is at least the half of a time constant of the second controller 98.

Figure 7 shows a schematic block diagram 100 with a feed forward controller 102 which produces the signal 78 to control the second control valve 62.

Figure 8 shows a schematic state diagram 104 with a steady state 106 and a transient state 108. The steady state 106 of the gas turbine 2 is characterized by and is determined by a constant load or a constant fluid mass flow through the first path 40 for example. The ratios of the respective variable or variables analyzed to determine the steady state 106 are tolerated to vary within limits for a defined period of time. The transient state 108 on the other hand is determined based on the respective variable or variables exceed the previously mentioned limits for a further defined period of time. The transient state 108 may relate to situations like up-loading, de-loading, power load shedding or the startup of the gas turbine 2.

In an embodiment the first coefficient 50 is adjusted and the second coefficient 52 is maintained at a fixed value in the transient state 108. In the steady state 106 the first hydraulic diameter 50 is maintained at a fixed value and the second hydraulic diameter 52 is adjusted.

According to an embodiment in the steady state 106 the signal 76 is maintained fixed and the control loop according to the block diagram 96 is active. In the transient state 108 the signal 78 is maintained fixed and the control loop according to the block diagram 92 is active.

According to an embodiment in the steady state 106 control loops according to the block diagrams 92 and 96 are active. In the transient state 108 a control loop according to the block diagram 92 is active and the signal 78 is hold at a fixed value.

According to an embodiment in the steady state 106 the control loop according to the block diagram 92 is active and a control loop according to the block diagram 96 is active. In the transient state 108 a control loop according to the block diagram 92 is active and a control according to the block diagram 100 is active.

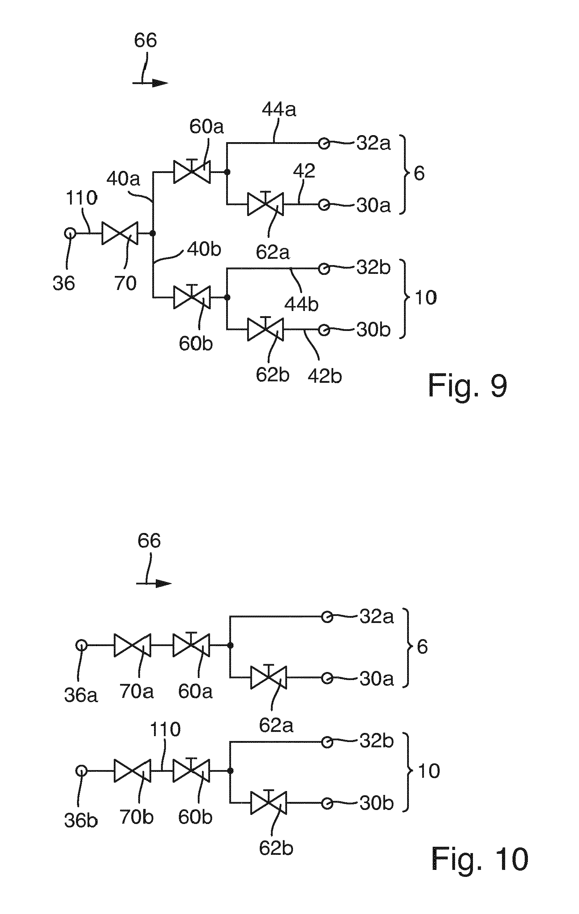

In figure 9 it is shown a valve/path configuration for two groups 6, 10 burners. With reference to figure 1 and 2 instead of the burners 20 and 24 it can be referenced to in a more general fashion to two inlets.

Each of the groups 6 and 10 comprises a configuration according to a configuration between the connection points 68 and 32 and 30 of the block 34 in figure 3 and 4s. Therefore reference can be made to the first control valve 60a and the second control valve 62a. A fourth path 40b comprises a third control valve 60b. The fourth path 40b is divided into a fifth path 42b which comprises a fourth control valve 62b, and a sixth path 44b.

The first and fourth fluid paths 40a and 40b are connected to the same fluid source and/or the same fluid path via a further fluid path 110 which comprises the shut off valve 70.

In figure 10 it is shown a further valve/path configuration for two groups 6 and 10. In comparison to the configuration shown in figure 9, figure 10 comprises two different connection points 36a and 36b for connecting it with a different fluid source. The shut off valves 70a and 70b are connected to the first and third valves 60a and 60b, respectively.

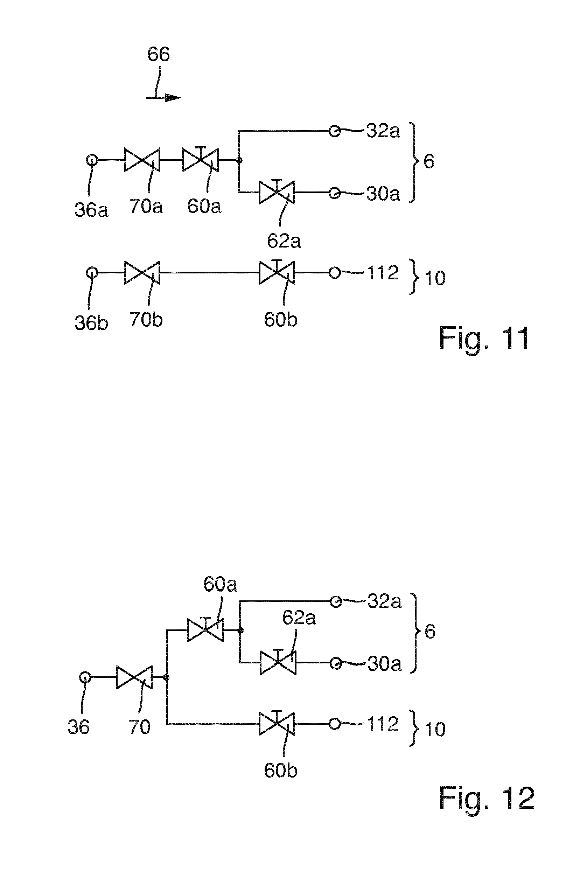

Figure 11 shows a further embodiment of a valve/path configuration for different groups 6 and 10. For the group 6 an arrangement according to the block 34 is provided. For the group 10 it is provided a connection point 112 and a further control valve 60b.

Figure 12 shows schematically a valve/path configuration for groups 6 and 10. With difference to figure 11 the configuration of figure 12 provides a common fluid source by connection point 36.

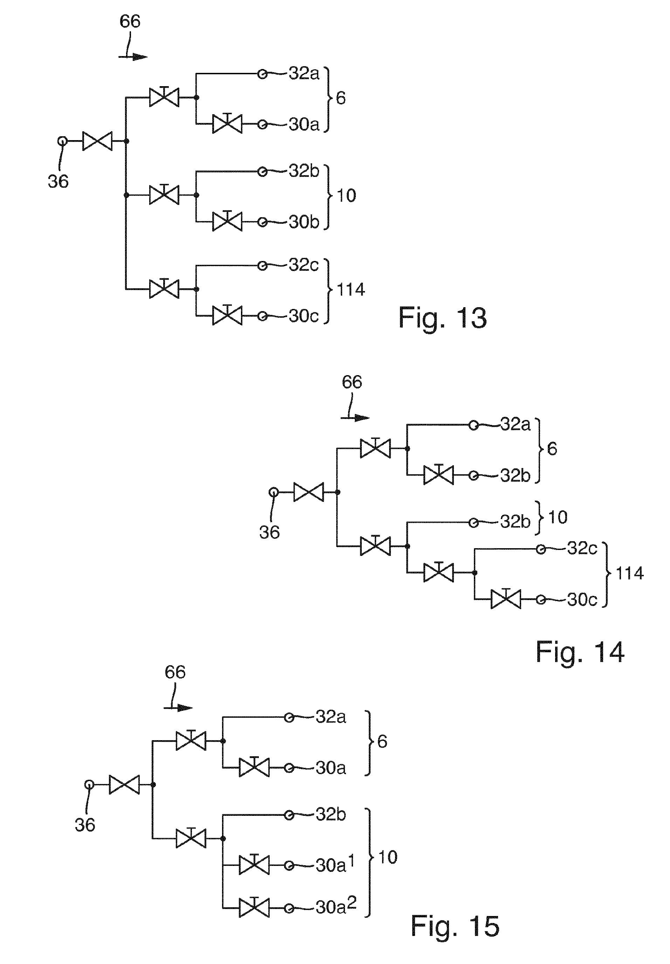

Figure 13 shows schematically a valve/path configuration for groups 6, 10 and 114. With difference to figure 9 is provided a further configuration of paths and control valves according to the configuration between the connection points 68, 30 and 32 of block 34 in figure 4, wherein this configuration is attached to the shut off valve.

Figure 14 shows schematically a further embodiment of a valve/path configuration for groups 6, 10 and 114. With difference to figure 9 it is provided a further path separation on connection point 30b of figure 9 for the group 114.

Figure 15 shows a further valve/path configuration for groups 6 and 10. With difference to figure 9 the configuration of figure 15 provides connection points 30a1 and 30a2 for two different stages wherein the corresponding path of connection points 30a1 and 30a2 comprises and/or includes a respective control valve.

LIST OF REFERENCE SIGNS

| | |
|---|---|
| 2 | gas turbine |
| 4 | compressor |
| 6 | first combustor |
| 8 | first turbine |
| 10 | second combustor |
| 12 | second turbine |
| 14 | generator |
| 16 | shaft |
| 18 | fuel feed |
| 20 | burner |
| 22 | fuel feed |
| 24 | burner |
| 26 | first stage |
| 28 | second stage |
| 30 | connection point |
| 32 | connection point |
| 34 | block |
| 36 | connection point |
| 40 | first fluid path |
| 42 | second fluid path |
| 44 | third fluid path |
| 46 | separation unit |
| 50 | first hydraulic diameter |
| 52 | second hydraulic diameter |
| 54 | third hydraulic diameter |

| 60 | first control valve |
| --- | --- |
| 62 | second control valve |
| 64 | ratio |
| 66 | flow direction |
| 68 | connection point |
| 70 | shut off valve |
| 72 | control unit |
| 74 | control signal |
| 76 | control signal |
| 78 | control signal |
| 80 | pressure sensor |
| 82 | pressure |
| 84 | pressure sensor |
| 86 | pressure |
| 88 | pressure sensor |
| 90 | pressure |
| 92 | diagram |
| 94 | controller |
| 96 | diagram |
| 98 | controller |
| 100 | diagram |
| 102 | controller |
| 104 | diagram |
| 106 | steady state |
| 108 | transient state |
| 110 | fluid path |
| 112 | connection point |
| 114 | group |

**Claims**

1. A gas turbine (2), wherein a fluid is supplied to the gas turbine (2) by means of fluid paths (40, 42, 44), wherein a first fluid path (40) is divided into a second and third fluid path (42, 44) in a flow direction (66) of the fluid, wherein a first control valve (60) controls a fluid mass flow in the first fluid path (40), and wherein a second control valve (62) controls a ratio (64) of fluid mass flows in the second and third fluid paths (42, 44).

2. The gas turbine (2) according to claim 1, wherein a first hydraulic diameter (50) of the first fluid path (40) is adjustable by means of the first control valve (60), wherein a second hydraulic diameter (52) of the second fluid path (42) is adjustable by means of the second control valve (62), and wherein a third hydraulic diameter (54) of the third fluid path (44) is fixed.

3. The gas turbine (2) according to claim 1 or 2, wherein a shut off valve (70) is arranged in series with the first control valve (60), and wherein the first control valve (60) provides a shut off capability.

4. The gas turbine (2) according to one of the preceding claims, wherein a fourth fluid path (40b) is divided into a fifth and sixth fluid path (42b, 44n) in a flow direction (66) of the fluid, wherein a third control valve (60b) controls a fluid mass flow in the fourth fluid path (40b), wherein a fourth control valve (62b) controls a ratio (64) of the mass flows in the fifth and sixth paths (42b, 44b), wherein a fourth hydraulic diameter (50b) of the fourth fluid path (40b) is adjustable by means of the third control valve (60b), wherein a fifth hydraulic diameter (52b) of the fifth fluid path (42b) is adjustable by means of the fourth control valve (62b), and wherein a sixth hydraulic diameter (54b) of the sixth fluid path (44b) is fixed.

5. The gas turbine (2) according to claim 4, wherein the first and fourth fluid paths (40a, 40b) are connected to the same fluid source.

6. The gas turbine (2) according to claims 2 to 5, wherein the maximum of the second hydraulic diameter (52) is smaller than the third hydraulic diameter (54).

7. The gas turbine (2) of one of the preceding claims, wherein the second fluid path (42) supplies a first stage (26) of fluid outlets, and wherein the third fluid path (44) supplies a second stage (28) of fluid outlets, and wherein the first and second stage (26, 28) are attached to at least one of the burners (20, 24) or the first and second stage (26, 28) are attached to at least two different burners (20, 24), respectively; and/or wherein the fifth fluid path (42b) supplies a third stage (26b) of fluid outlets, and wherein the sixth fluid path (44b) supplies a fourth stage (28b) of fluid outlets, , and wherein the third and fourth stage (26b, 28b) are attached to at least one of the burners (20, 24) or the third and fourth stage (26b, 28b) are attached to at least two different burners (20, 24), respectively.

8. The gas turbine (2) according to one of the preceding claims, wherein the second and/or fourth path (42; 42a; 42b) is connected to a fewer number of fluid outlets, than the third and/or sixth path (44; 44a; 44b).

9. A method to operate a gas turbine (2), wherein a fluid is supplied to the gas turbine (2) by means of fluid paths (40, 42, 44), wherein a first fluid path (40) is divided into a second and third fluid path (42, 44) in a flow direction (66) of the fluid, wherein a first control valve (60) controls a fluid mass flow in the first fluid path (40), and wherein a second control valve (62) controls a ratio (64) of fluid mass flows in the second and third fluid paths (42, 44).

10. The method according to claim 9, wherein a first hydraulic diameter (50) of the first fluid path (40) is adjustable by means of the first control valve (60), wherein a second hydraulic diameter (52) of the second fluid path (42) is adjustable by means of the second control valve (62), and wherein a third hydraulic diameter (54) of the third fluid path (44) is fixed.

11. The method according to claim 10, wherein the first hydraulic diameter (50) is adjusted in a first time interval, especially corresponding to a transient state (108) of the gas turbine (2), while the second hydraulic diameter (52) is maintained at a fixed value, and wherein the second hydraulic diameter (52) is adjusted in a second time interval, especially corresponding to a steady state (106) of the gas turbine, while the first hydraulic diameter (50) is maintained at a fixed value.

12. The method according to claim 10 or 11, wherein the first hydraulic diameter (50) is affected by means of the first control valve (60) controlled by a first closed-loop controller (94), wherein the second hydraulic diameter (52) is affected by means of the second control valve (62) controlled by a second closed-loop controller (98), and wherein a bandwidth of a first control loop (92) comprising the first closed-loop controller (94) is greater than a bandwidth of a second control loop (96) comprising the second closed-loop controller (98).

13. The method according to claim 10 or 12, wherein the second hydraulic diameter (52) is affected in a steady state (106) of the gas turbine (2) by means of the second control valve (62) controlled by a second closed-loop controller (98), and wherein the second hydraulic diameter (52) is affected in a transient state (108) of the gas turbine (2) by means of the second control valve (62) controlled by a feed forward controller (102).

14. The method according to claim 12 or 13, wherein a process variable of the first closed-loop controller (94) is a pressure difference between a pressure before the first control valve (60) and a pressure behind the first control valve (60) and/or a fluid temperature of fluid in the first path (40) and/or a total fluid mass rate through the first path (40), and/or wherein a process variable of the second closed-loop controller (98) is a pressure difference between a pressure before the second control valve (62) and a pressure behind the second control valve (62) and/or an emission of the gas turbine (2), especially a ratio of nitrogen oxides, of carbon monoxide or of unburned hydrocarbons in the emissions,) and/or a flame stability criteria.

15. Control unit (72) for operating a gas turbine (2) with a digital computation unit for executing a computer program which is adapted to perform a method according to one of the claims 9 to 14.

Fig. 1

Fig. 2

Fig. 3

Fig. 4

92

Fig. 5

96

Fig. 6

100

Fig. 7

104

Fig. 8

Fig. 9

Fig. 10

66

Fig. 11

36a 70a 60a 62a 32a 30a 6
36b 70b 60b 112 10

60a 62a 32a 30a 6
36 70 60b 112 10

Fig. 12

Fig. 13

Fig. 14

Fig. 15

Europäisches
Patentamt

European
Patent Office

Office européen
des brevets

# EUROPEAN SEARCH REPORT

Application Number

EP 13 18 5968

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2008 053755 A1 (PFEIFER UWE [DE]; ZIDORN MICHAEL [DE]) 29 April 2010 (2010-04-29) * claims 1,3 * * figure 1 * | 1-15 | INV. F02C7/228 |
| X | DE 35 43 908 C1 (MTU MUENCHEN GMBH [DE]) 29 January 1987 (1987-01-29) * column 6, line 6 - column 10, line 60 * * figure 1 * | 1,2,9,10 | |
| X | EP 0 371 250 A1 (GEN ELECTRIC [US]) 6 June 1990 (1990-06-06) * column 1, line 54 - column 3, line 6 * * figure 3 * | 1,9 | |
| A | EP 1 288 467 A1 (MITSUBISHI HEAVY IND LTD [JP]) 5 March 2003 (2003-03-05) * paragraphs [0024] - [0033] * * figure 1 * | 1-15 | |

| | TECHNICAL FIELDS SEARCHED (IPC) |
|---|---|
| | F02C |

The present search report has been drawn up for all claims

| Place of search | Date of completion of the search | Examiner |
|---|---|---|
| The Hague | 20 March 2014 | Gebker, Ulrich |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&: member of the same patent family, corresponding document

EPO FORM 1503 03.82 (P04C01)

**ANNEX TO THE EUROPEAN SEARCH REPORT
ON EUROPEAN PATENT APPLICATION NO.** EP 13 18 5968

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2014

| Patent document cited in search report | | Publication date | Patent family member(s) | | Publication date |
|---|---|---|---|---|---|
| DE 102008053755 | A1 | 29-04-2010 | NONE | | |
| DE 3543908 | C1 | 29-01-1987 | DE | 3543908 C1 | 29-01-1987 |
| | | | FR | 2591662 A1 | 19-06-1987 |
| | | | GB | 2184169 A | 17-06-1987 |
| | | | JP | H0639911 B2 | 25-05-1994 |
| | | | JP | S62142829 A | 26-06-1987 |
| | | | US | 4719750 A | 19-01-1988 |
| EP 0371250 | A1 | 06-06-1990 | DE | 68914409 D1 | 11-05-1994 |
| | | | DE | 68914409 T2 | 27-10-1994 |
| | | | EP | 0371250 A1 | 06-06-1990 |
| | | | IN | 172359 A1 | 26-06-1993 |
| | | | JP | 3097747 B2 | 10-10-2000 |
| | | | JP | H02163422 A | 22-06-1990 |
| | | | NO | 894723 A | 29-05-1990 |
| | | | US | 4949538 A | 21-08-1990 |
| EP 1288467 | A1 | 05-03-2003 | CA | 2399667 A1 | 24-02-2003 |
| | | | CN | 1401939 A | 12-03-2003 |
| | | | EP | 1288467 A1 | 05-03-2003 |
| | | | JP | 2003065075 A | 05-03-2003 |
| | | | US | 2003037536 A1 | 27-02-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• DE 102006015529 A1